# EUROPEAN PATENT APPLICATION

(11) **EP 2 412 231 A1**
(43) Date of publication of application: **01.02.2012**
(21) Application number: 11175148.3
(22) Date of filing: 25.07.2011
(51) Int. Cl.: A01G 9/12

(54) **Reel for supporting plants and method for wrapping rope on said reel**

(30) Priority: 27.07.2010 NL 1038128
(71) Applicant: Schoenmaker, Karel Jan, 2672 DN Naaldwijk (NL)
(72) Inventor: Schoenmaker, Karel Jan, 2672 DN Naaldwijk (NL)
(74) Representative: Plaggenborg, Menko Bernard

(57) **Abstract**

The invention relates to a apparatus for hanging plants, comprising a plant reel that is to be suspended horizontally from a suspension wire that is provided above the crop, wherein the plant reel comprises: - two oppositely positioned first winding positions of a first rope storages for winding rope; - at least one hook for suspending the plant reel to the suspension wire, - and a second rope storage with at least two second winding positions. The apparatus is characterised in that said two second winding positions each have been provided closer to the at least one of the plant reel's respective suspension hooks than the first winding positions of said first rope storage, and wherein the plant reel comprises rope, a first part thereof being wound around said first winding positions and a second part has been wound around said second winding positions, such that the second part of said rope has been positioned between the rope that has been wound around said first winding positions. The invention also relates to a method for winding rope around a plant reel.

## Description

The invention relates to an apparatus for hanging plants, comprising a plant reel that is to be suspended horizontally from a suspension wire that is provided above the crop, wherein the plant reel comprises: - two oppositely positioned first winding positions of a first rope storages for winding rope; - at least one hook for suspending the plant reel to the suspension wire, - and a second rope storage with at least two second winding positions. The invention also relates to a method for providing a plant reel with rope.

Plant reels (hereafter the term "hook" is used as well) are known in horticulture and are used for suspending plants from a wire, also identified by the term "suspension wire", running between opposite front facades in a green house. Supporting means are provided to support said suspension wire near lattice girders in the green house. Plant reels are used to suspend the growing plants, which are connected to the plant reels by means of a rope. A known plant reel, also called plant hook or hook, has two hooks and comprises a central portion in between said hooks, said central portion functioning as a rope storage and containing rope or yarn. The central portion also supports the hooks. The plant reel can preferably be provided with two supporting legs and two suspension hooks, but may be provided with a single supporting leg and a single suspension hook. The plant reel is suspended with a hook from the running wire, i.e. the suspension wire, that may be positioned a few metres above the plants. The rope is unwound from said plant reel and led down and connected to said plant. The plant will grow upwards along said rope. Eventually, it will reach the suspension wire. At that moment, more rope can be unwound from said plant reel by lifting the plant reel and the plant from the suspension wire and turning said hoo, so as to unwound part of said rope. The plant reel is than lifted and moved to another position on said suspension wire, such that an additional length of rope is available for growing along. This operation is called "lowering" the plant and is a cumbersome and physically demanding operation.

A plant reel is known from FR2680446, comprising two rope storages. The rope of the second rope storage has been wrapped tightly around a part of the plant reel that can be disconnected from the plant reel, after which the rope can be taken away from the second rope storage. The rope of said second rope storage is used to connect the plant and is sufficiently long to bridge the distance to the plant. Lowering the plant is performed by unwinding rope from the first rope storage.

EP2005815 describes a plant reel comprising two rope storages. Rope from a second rope storage is connected to the rope from a first rope storage by means of adhesive tape. Such embodiment does not provide the possibility of automatically, by a single movement of the plant reel, releasing rope from the second rope storage; an additional operation is required to release rope.

Another known plant reel is known from Dutch patent application NL 8902036. That publication relates to a plant reel wherein extremities are connected when in use. This plant reel comprises a disconnectable closure. By tilting the plant reel, the rope is released from the single rope storage, the plant reel is positioned vertically, and the suspension hooks are directed to each other.

A still different embodiment is mentioned in Dutch patent application NL 1009882, which document however relates to a vertically suspended plant reel, the suspension hooks are directed to each other, and the plant reel has to be lifted from the suspension wire so as to be able to slide same along the suspension wire. This plant reel comprises a single rope storage.

These known plant reels have the disadvantage that a large movement of the plant reel is required to unwind rope from the plant reels. This is a disadvantage for the people using the plant reel.

The invention now aims at providing an improved plant reel.

The invention especially aims at providing a plant reel that enables a simple removal of rope from the plant reel.

The invention further aims at providing a plant reel that provides easier labour by eliminating the need to lift the plant reel and the plant when lowering the plants.

To this end, the invention provides a plant reel as mentioned above, wherein said two second winding positions each have been provided closer to the at least one of the plant reel's respective hanging hooks (also called "suspension hooks") than the first winding positions of said first rope storage, and wherein the plant reel comprises rope, a first part thereof being wound around said first winding positions and a second part has been wound around said second winding positions, such that the second part of said rope has been positioned between the rope that has been wound around said first winding positions. The invention furthermore provides the advantage with respect to the state of the art by the hooks, where space is provided for a second rope storage.

By providing the second rope storage between the first rope storage and the hanging hooks, the advantage is obtained that, when the plant reel suspends from the suspension wire, a turning movement of the plant reel around one of the winding positions, frees rope from the rope storage.

Furthermore, it is preferred that the winding positions of the first rope storage are provided such that, while suspending from said suspension wire, a turning movement of the apparatus around a suspension hook, releases (i.e. unwinds) rope from the plant reel. When lowering the plants, the plant reel does not have to be lifted up from the suspension wire. On the contrary, a simple turn of the plant reel will release a part of the rope there from.

Furthermore, it is preferred that the first winding positions of said first rope storage have a relatively smaller distance to each other than parts of the plant reel that are situated alongside of said first winding positions, wherein the first winding positions and the hooks are positioned in a common plane, and wherein the hooks have a relatively larger distance to each other than the first winding positions, said hooks preferably being formed by legs that are directed away from the first rope storages. This provides a further simplification for removing rope from the first rope storage upon a turning movement.

It is also preferred that the winding positions of the first and the second rope storages are positioned in a common plane and wherein the winding positions of the second rope storage have been formed from two winding positions at a first side of the first rope storage and the rope that has been wound around said second winding positions has been partly positioned between the rope that has been wound around said first winding positions, preferably to a position further than a second side of the first rope storage, such that rope of the second rope storage is positioned in a V-shape or a triangle and has been partly blocked by the tightly wound first rope package. This provides for a larger storage capacity without the disadvantage that rope is removed too easily from the plant reel.

It is also preferred that the second rope package partly has been wound horizontally, if considered from a state of use of said apparatus, above said first rope package, since such embodiment provides for an easy displacement of the rope of the second rope storage from between the rope of the first rope storage.

According to a further preferred embodiment, wherein the plant reel comprises a slide wire, for displacing the plant reel along the suspension wire, and wherein the slide wire slides cross-wise along said suspension wire when sliding said plant reel. The present invention provides a piece of material having a minimal length of about 5 mm, called the plant reel's "slide wire", that is provided between the brake angle and support angle of a horizontally suspended plant reel and that is provided for easily displacing, i.e. sliding, the plant reel into both directions along the suspension wire, as applied in horticulture, especially in market gardening.

As a consequence, the invention also relates to an apparatus, wherein the plant reel comprises a slide piece at a hook part of the plant reel, said slide piece having a length of more than 5 mm.

Finally, it is preferred that the plant reel, when suspending from the suspension wire, is removed from a brake angle or brake position, when turning the plant reel clockwise or counter clockwise.

For example, the plant reel may be made two or three dimensionally from a punched or bent material.

Finally, the invention relates to a method for providing a plant reel with rope, comprising the steps of: - providing a plant reel comprising winding positions for a first rope storage and winding positions for a second rope storage, connecting rope to the plant reel and winding a first part of said rope to around said winding positions of said first rope storage, and subsequently winding a second part of said rope around winding positions of said second rope storage. The method is characterised in that the winding positions of said second rope storage are formed by two winding positions on the plant reel that have been provided at a first side of the first rope storage and a last winding position that has been provided outside the plant reel, and, after finishing said winding, releasing the rope from said last winding position and fixedly positioning said released part of said rope between the first rope storage. By this method, a fast positioning of the apparatus on the suspension wire is obtained, with the advantage that the rope around the second rope storage can be wound loosely such that no foldings will be obtained in the rope. Such eases connecting the rope to the plant.

The method is preferably performed by providing said first winding positions of said second rope storage at a first side of said first rope storage and providing the last winding position at another side of said first rope storage. This eases the winding of the plant reel and positioning the rope between the first rope storage.

The invention will now be described under reference to the accompanying drawing, showing a preferred embodiment of the invention.

The drawing shows in:
Fig. 1 a view of the plant reel obtained from a bent wire, without rope,
Fig. 2 a view of the plant reel obtained from a bent wire in accordance with the invention having a double rope package in a V-shape,
Fig. 3 a view of the suspension hook of the plant reel obtained from a bent wire,
Fig. 4 a view of the plant reel obtained from a bent wire in accordance with the invention, suspended in a right angle from the suspension wire in a braking position,
Fig. 5 a view of the plant reel obtained from a bent wire in accordance with the invention suspended from a suspension wire when in use, and
Fig. 6 a plant reel according to the state of the art provided with a second rope storage according to the present invention.

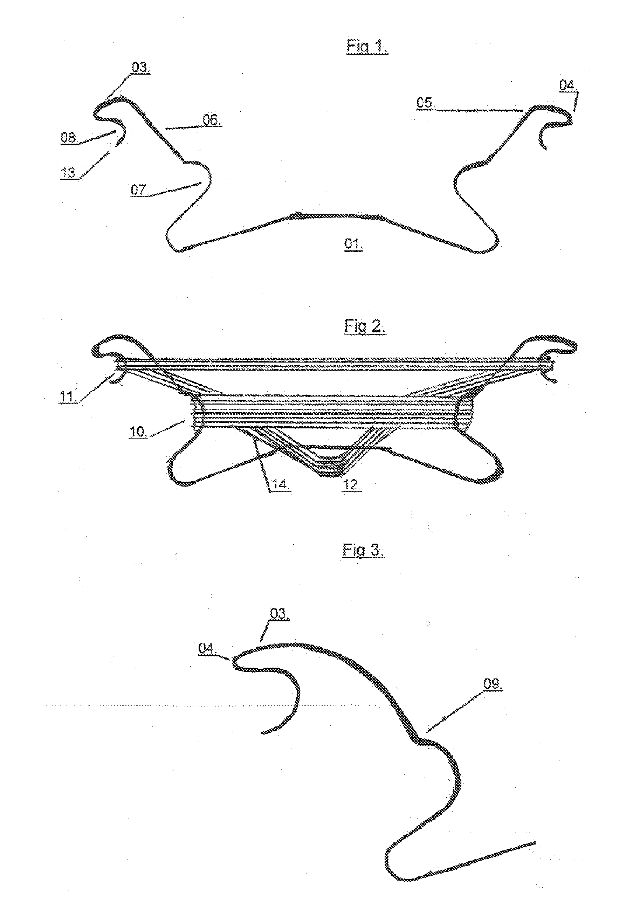

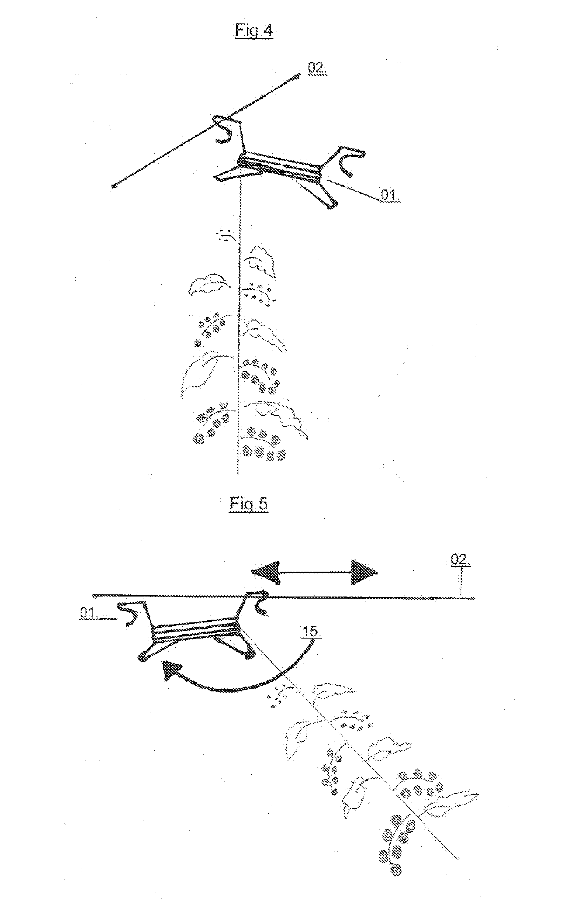

Under reference to Fig. 1 and Fig. 4, when using the plant reel 1, the reel suspends in its braking position 4 and is directed towards a person operating same. The reel can be turned over about 80° or 90°, as also shown in Fig. 5 at reference numeral 15. This movement may be to the left or to the right, i.e. clockwise or counter-clockwise, in the longitudinal direction of the suspension wire 2. While suspending from the suspension wire 2 the plant reel 1 is lifted from its braking position out of the brake angle, as shown in Fig. 5. A slide wire 3, having a length that is larger than about 5 mm, being connected to the support angle 5, is positioned at an angle 9 with respect to a support leg 6. This angle 9 is preferably less than 135° with respect to the support leg. The support leg continues towards the angle (an incurvature) of the plant reel's first rope storage 7. When the plant reel 1 is positioned in the longitudinal direction of the suspension wire the reel may be pushed or pulled, while being supported by the suspension wire. Only the slide wire, being part of the plant reel 1, between the braking angle and the support angle, is supported cross-ways by the suspension wire. Now, there is a cross-way positioning of the plant reel's slide wire with respect to the suspension wire 2. In this position, there is very little slide resistance between the plant reel 1 and the suspension wire 2 when sliding the plant reel 1 along the suspension wire 2, and the plant reel 1 can not fall from the suspension wire 2 since the support leg 6 and the incurvature for the second rope storage 8 concurrently function as supports and as a consequence prevent such falling from the suspension wire.

There are a few possibilities for operating the plant reel. A first way of operation is turning the plant reel to the left or to the right towards the suspension wire while the suspension hook is in contact with the suspension wire, as shown in Fig. 5. The plant reel 1 is pushed from its braking position. By slightly lifting the plant reel 1 at its back side the rope is dislocated from the rope storage. After that, the plant reel can be pushed along, still being supported on the suspension wire.

A second way of operation consists of turning the plant reel to the left or to the right, depending on the direction in which the plants grow and are to be lowered, until they almost contact the suspension wire and while the plant reel is connected to the suspension wire. The plant reel is pushed from its braking position. The slide wire is cross-ways supported by the suspension wire. Then the plant reel may be pulled towards the operator (as shown in Fig. 5) without the angle being pulled in its braking position 4 (as shown in Fig. 1) and while the rope package is positioned parallel to the suspension wire, such that the plant is in an inclined position after the plant reel has been displaced (as indicated in Fig. 5). By this operation and due to the weight of the plant, the rope is dislocated from the rope storage; a so-called push-pull movement with a concurrent lowering movement of the plant. When guiding the back side of the plant reel downwards, the second part of the rope is dislocated from the rope storage. When releasing the plant reel, it is brought automatically into a braking position or hold-position, whereas the plant reel is positioned perpendicular to the suspension wire (as indicated in Fig. 4). Now, the plant has been lowered and has been moved sideward for one lowering length.

A still other way of operating the plant reel 1, is by turning the plant reel to the left with one hand and turning another plant reel with the other hand to the right. Such provides the opportunity to pushing each second plant reel mirror-wise or pulling all plant reels. The plant reel should be operated analogously to the previously mentioned method of operation.

Fig. 3 shows a view of a part of the plant reel according to the present invention. The plant reel 1 can be slided along the suspension wire 2 via the slide wire 3, so as to displace the plant reel 1 to another position on the suspension wire 2. When in use, the plant reel 1 suspends from the suspension wire 2 by its suspension angle 4. The suspension angle 4 then serves as a braking angle 4. In the present embodiment, the plant reel 1 has been made from a bent metal wire. From the slide wire 3, the plant reel's material (here the bent metal wire) runs to winding positions 7 of a first rope storage 10 (see Fig. 1, not identified in Fig. 3) via a curvature 9 that prevents the rope to be displaced from the rope storage 10 to the suspension angle 4, especially when winding rope around said first winding positions.

The braking angle 4 comprises an incurvature 8 in an extension 13. The extension has a dual function: it prevents the falling of the plant reel from the suspension wire and it provides the opportunity to store a second rope package 11. The second rope package 11 is provided for making a connection at the start of the culturing season between the plant reel and the plant. The second rope package has a previously determined length, which depends on the height of the green house and is wrapped loosely (reference numeral 12) around the incurvature of the plant reel's extension 8, such that the rope may be dislocated easily from the second rope storage. Since the rope has been wrapped loosely, folding of the rope will not occur and, as a consequence, the rope suspends in a straight line which eases the connection of the rope to the plant. So as to equalize loose parts of the rope 12 that is wrapped around the incurvature 8 of the plant reel's extension 13, the rope is placed (reference numeral 14) between the rope of the first rope storage during, or optionally after, wrapping rope around the plant reel 1. Since the first rope package 10 has been wrapped more tightly around the plant reel, the loose parts of the second rope storage's rope can be clamped in between the first rope package, and as a consequence the rope will not be dislocated from the incurvature 8 at the extension 13 of the plant reel, when operating same.

The rope of the first rope storage now has a double function: to provide for a connection between the plant reel and the plant as well as to clamp rope of the second rope storage. The second rope storage is positioned partly horizontally above the first rope storage and partly below same, and has been wrapped into a triangle 14 due to an incurvature 12 at the other side of the first rope storage 10 as shown in Fig. 2. The second rope storage has been wrapped loosely around the incurvatures in the extensions of the suspension hooks and have been wrapped between the tightly wrapped rope package of the first rope storage (see Fig. 2).

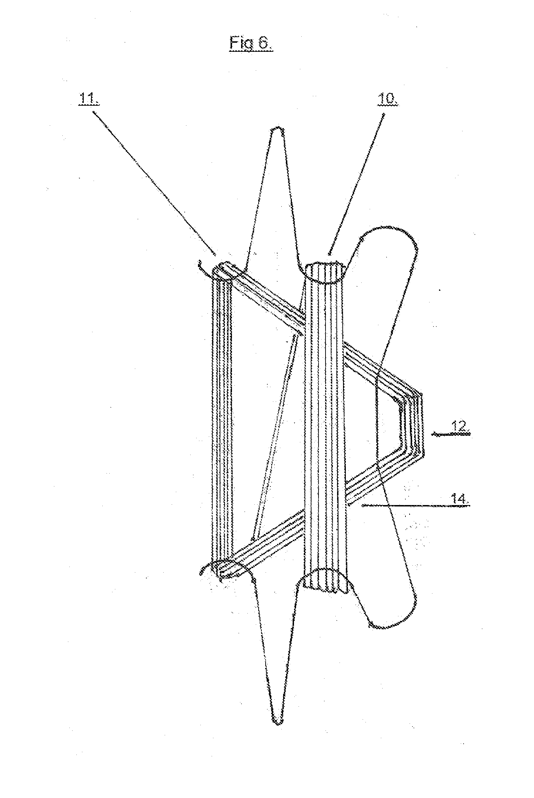

A second rope storage can be applied at the plant reel known in the state of the art, as indicated in Fig. 6. Fig. 6 shows a plant reel, the suspension hook's legs and inlets of which are directed towards each other. Both legs are provided with an incurvature 11 which point away from the tightly wrapped first rope package 10. The second rope package may be wrapped around the incurvatures. The length of the rope that has been freed by taken it from the last winding position, can be wrapped and clamped completely or partly between the parts of the first rope package in the form of a triangle or a V-shape, as shown in Fig. 6 with reference numeral 14. The second rope storage's rope wrapping length is longer than the distance between both incurvatures 11, at both legs of the suspension hooks, such that the rope may be pulled over the incurvature of the suspension hook's leg. As a consequence, the rope is dislocated from a position between parts of the first rope storage. After that, the rope may be dislocated from the second rope storage and the first rope package is connected to the plant: then the rope may be connected to the plant such that the plant reel is fit for supporting the plant during its culture.

De apparatus according to the invention can be provided with rope by connecting a first part of a rope or yarn to a first winding position and winding same around the first winding position of the first rope storage by means of a winding machine. Subsequently, the rope is wound continuously around the two winding positions of the second rope storage that have been provided on the plant reel and around a third (or last) winding position that has been provided at a position outside the plant reel, for example a position on the winding machine. After having finished winding the second part of the rope, the second rope storage's rope will be released from the third winding position and be fixedly positioned between the first rope storage's rope. The rope will be clamped between said first rope storage. Upon use, the rope can be easily taken from the first rope storage, such that the plant reel can be suspended from the suspension wire from its suspension hook.

The various ways of operating the plant reel according to the present invention prevent monotonous work and diminish the risks of injury.

According to the invention, additional space is created for storing a second rope package onto the plant reel.

## Claims

1. Apparatus for hanging plants, comprising a plant reel that is to be suspended horizontally from a suspension wire that is provided above the crop, wherein the plant reel comprises: - two oppositely positioned first winding positions of a first rope storages for winding rope; - at least one hook for suspending the plant reel to the suspension wire, - and a second rope storage with at least two second winding positions, **characterized in that** said two second winding positions each have been provided closer to the at least one of the plant reel's respective suspension hooks than the first winding positions of said first rope storage, and wherein the plant reel comprises rope, a first part thereof being wound around said first winding positions and a second part has been wound around said second winding positions, such that the second part of said rope has been positioned between the rope that has been wound around said first winding positions.

2. Apparatus according to claim 1, wherein the winding positions of said first rope storage have been provided such that, when suspending from a suspension wire, a turning movement of the reel around a suspension hook, releases rope from said rope storage.

3. Apparatus according to claim 1 or 2, wherein the first winding positions of said first rope storage have a relatively smaller distance to each other than parts of the plant reel that are situated alongside of said first winding positions, wherein the first winding positions and the hooks are positioned in a common plane, and wherein the hooks have a relatively larger distance to each other than the first winding positions, said hooks preferably being formed by legs that are directed away from the first rope storages.

4. Apparatus according to any of the previous claims, wherein the winding positions of the first and the second rope storages are positioned in a common plane and wherein the winding positions of the second rope storage have been formed from two winding positions at a first side of the first rope storage and the rope that has been wound around said second winding positions has been partly positioned between the rope that has been wound around said first winding positions, preferably to a position further than a second side of the first rope storage, such that rope of the second rope storage is positioned in a V-shape or a triangle and has been partly blocked by the tightly wound first rope package.

5. Apparatus according to any of the previous claims, wherein the second rope package partly has been wound horizontally, if considered from a state of use of said apparatus, above said first rope package.

6. Apparatus according to any of the previous claims, wherein the plant reel comprises a slide wire, for displacing the plant reel along the suspension wire, and wherein the slide wire slides cross-wise along said suspension wire when sliding said plant reel.

7. Apparatus according to any of the previous claims, wherein the plant reel comprises a slide piece at a hook part of the plant reel, said slide piece having a length of more than 5 mm.

8. Apparatus according to any of the previous claims, wherein the plant reel, when suspending from the suspension wire, is removed from a brake angle or brake position, when turning the plant reel clockwise or counter clockwise.

9. Apparatus according to claim 1-8, wherein the plant reel has been designed two or three dimensionally, preferably as a bent or punched material.

10. A method for providing a plant reel with rope, comprising the steps of: - providing a plant reel comprising winding positions for a first rope storage and winding positions for a second rope storage, connecting rope to the plant reel and winding a first part of said rope to around said winding positions of said first rope storage, and subsequently winding a second part of said rope around winding positions of said second rope storage, **characterised in that** the winding positions of said second rope storage are formed by two winding positions on the plant reel that have been provided at a first side of the first rope storage and a last winding position that has been provided outside the plant reel, and, after finishing said winding, releasing the rope from said last winding position and fixedly positioning said released part of said rope between the first rope storage.

11. A method according to claim 10, wherein said first winding positions of said second rope storage have been provided at a first side of said first rope storage and the last winding position has been provided at another side of said first rope storage.
